# EUROPEAN PATENT SPECIFICATION

(11) **EP 3 008 032 B1**
(45) Date of publication and mention of the grant of the patent: **22.01.2025**
(21) Application number: 14729330.2
(22) Date of filing: 11.06.2014
(51) Int. Cl.: C04B 28/14, C04B 28/16, C04B 111/62

(54) **THERMALLY CONDUCTIVE SCREED**
WÄRMELEITENDER ESTRICH
CHAPE THERMIQUEMENT CONDUCTRICE

(30) Priority: 12.06.2013 EP 13290143
(43) Date of publication of application: 20.04.2016
(73) Proprietor: Anhydritec, 84800 L'Isle-sur-la-Sorgue (FR)
(72) Inventor: BOCQUET, Anne-Claire, F-84130 Le Pontet (FR)
(74) Representative: August Debouzy
(86) International application number: PCT/EP2014/062062
(87) International publication number: WO 2014/198742

(56) References cited:
- EP-A1- 2 476 658
- WO-A1-2011/095634
- CN-A- 101 376 583
- DE-A1- 10 049 230
- DE-A1- 10 341 299
- DE-A1- 102004 039 107

## Description

### Field of the invention

The present invention relates to compositions suitable for use as floor screed, the compositions being based on hydraulic binders.

### Background of the invention

A floor screed is used in buildings to level and flatten the underlying concrete layer and in which pipes and cables can be housed. It should have a good thermal conductivity in case it houses ducts for floor heating. A self-leveling screed is a liquid mortar mainly formed from a hydraulic binder such as cement or calcium sulphate, aggregates and different additives; it is supplied on the job site by truck mixer or directly via a transmix distribution system.

Floor screeds based on cement and/or calcium sulphate binders are well known in the art.

Attempts have been made to improve the thermal conductivity of floor screeds by adding expanded graphite, as described in DE10049230. According to DE10049230, an amount of expanded graphite of 5%w to 35%w, based upon the dry weight of the floor screed is added to change the thermal conductivity, the size of the expanded graphite particles being in the range of 0.001 to 1 mm.

WO 2011/95634 A1 discloses a composition for preparing gypsum wallboards comprising a binder based on calcium sulphate in combination with expanded graphite with a D₅₀ of 500 micron to 4mm, the graphite being present in 0.1-10 wt.-%.

### Summary of the invention

It is an object of the present invention to provide compositions suitable for thermally conductive screeds based hydraulic binders, and thermally conductive floor screeds.

The invention further relates to floor screeds and floor heating systems obtained by using compositions according to the invention.

The invention also relates to the use of compositions according to the invention for floor screeds and floor heating systems.

The invention is set out in the appended set of claims.

According to a first aspect of the present invention, a floor screed composition is provided, the composition being set out in claim 1.

The weight percentage "X %w" of the expanded graphite means that X gram of expanded graphite is used per 100 gram of hydraulic binder.

By the term "hydraulic binder", reference is made to what is usually understood as hydraulic binders, i.e. compounds having the property to hydrate in the presence of water and moisture to gel a solid mechanical According to the invention the hydraulic binder is calcium sulphate.

This calcium sulfate can be beta calcium sulfate and/or alpha calcium sulfate from natural or synthetic origin, or anhydrous calcium sulfate, e.g. anhydrite II or anhydrite III, obtained from sources of synthesis (for example fluoro anhydrite) or natural sources, e.g. by calcining natural or synthetic gypsum (e.g. from the desulfurization FGD gypsum). Examples of suitable calcining processes are classic calcination process or process RocalTM. One may use mixtures of different sources of calcium sulphate. The screed the invention generally meets the requirements of the European standards EN 13454-1 (binder) and EN 13813 (mortar) for calcium sulphate for fluid screed mortars and binders.

Calcium sulphate, usually as anhydride, may comprise at least 50% by weight of calcium sulphate, preferably at least 85% or even significantly 100%.

The screed may further comprise fillers of various kinds (calcareous, siliceous, Silica fume, fly ash can be used in addition to the calcium sulfate.

The used calcium sulphate preferably is anhydride.

The use of expanded graphite leads to higher values of thermal conductivity compared to unexpanded graphite.

If the amount of expanded graphite is above 12 weight % with respect to the weight of hydraulic binder, the cost of the formulation for use as a screed is too high, the further addition may not necessarily bring much additional increase of thermal conductivity, and there may be a potential reduction of mechanical performance.

Despite the low dosage of expanded graphite in the composition according to the invention, a thermal conductivity increase is obtained and thermal conductivity values, as measured according to NF EN 993-15, of at least 1.8 W/m.K, even of 2 W/m.K or more, or 2.2 W/m.K or more, e.g. 2.5 W/m.K or more, or even 2.8 W/m.K or more may be obtained . The low amounts of expanded graphite in the composition according to the present invention offers further advantages such as low additional dust generation and the ease of incorporation said graphite without excessive floating in aqueous medium. According to the invention, the composition comprises expanded graphite in an amount of at least 0.01%w, the %w being based upon the weight of said hydraulic binder.

According to some embodiments, the composition may comprise expanded graphite in an amount of at least 0.4%w, the %w being based upon the weight of said hydraulic binder.

The floor screed composition according to the present invention comprises expanded graphite preferably in an amount of from 0.4 to 6 weight% with respect to the weight of hydraulic binder. Compositions comprising expanded graphite in an amount of from 0.4 to 4 weight% with respect to the weight of hydraulic binder are particularly preferred.

The expanded graphite may have a specific BET surface ranging from 5 to 50m²/g, e.g. about 25 m²/g.

The expanded graphite may have a bulk density (scott density) ranging from 0.01 to 0.1 g/cm³, about 0.04 g/cm³, measured by ASTM n° E 153-59 T.

According to the invention the expanded graphite has a mean particle size D50, as measured by laser diffraction, ranging from 1 to 100µm.

The expanded graphite may have a mean particle size D50, as measured by laser diffraction, ranging from 20 to 60µm.

The floor screed composition usually comprises aggregate, e.g. sand, and may comprise other additives such as plasticizers, anti-foaming agents, fluidizers, superplasticizers and dispersants, SiC, B₄C and/or Al₂O₃.

According to the invention, the expanded graphite is present in an amount less than 2.5 %w, the %w being based upon the weight of said floor screed composition.

This weight percentage "X %w" of the expanded graphite means that X gram of expanded graphite is used per 100 gram of the floor screed composition in pourable form, i.e. ready to be used to provide the floor screed on the job site.

The floor screed composition according to the present invention comprises expanded graphite preferably in an amount less than 1.5 %w, the %w being based upon the weight of said floor screed composition. Floor screed comprising expanded graphite in an amount of from 0,001 to 2,5 weight%, such as in the range of 0.001%w to 1.5%w with said %w being based upon the weight of said floor screed composition are particularly preferred.

According to some embodiments, the floor screed composition may further comprise an anti foaming agent.

According to some embodiments, the anti foaming agent may be selected from silicone-based antifoaming agents, fatty acids, esters, polypropylene glycols, and combinations thereof.

The amount of anti foaming agent is preferably between 0.01 and 2%w, and more preferred between 0.01 and 0.5%w, the %w based upon the weight of said hydraulic binder.

According to some embodiments, the floor screed composition may further comprise fluidizing agents and/or dispersants and/or plasticizers and/ or superplasticizers.

The fluidizing agents and/or dispersants and/or plasticizers and/ or superplasticizers may be selected from sulfonated condensation products of formaldehyde and napthalene, sulfonated condensation products of formaldehyde and melamine, comb-branched copolymers having a backbone of acrylic and metacrylic acid, esterified with polycabroxylates or polyoxyalkylenes, such as polyoxyethylenes and combinations thereof.

The total amount of fluidizing agents and/or dispersants and/or plasticizers and/ or superplasticizers are is preferably between 0.01 and 2%w, and more preferred between 0.02 and 1%w, the %w based upon the weight of said hydraulic binder.

When fluidizing agents and/or dispersants and/or plasticizers and/ or superplasticizers are used, and an antifoaming agent is used, the weight ratio anti foaming agent over fluidizing agents and/or dispersants and/or plasticizers and/ or superplasticizers is between 0.005 and 200, preferably between 0.05 and 20.

The floor screed composition is combined and mixed with water to form a suitable floor screed in wet state. After applying the wet floor screed, the screed cures and evaporates part of the water. The floor screed so obtained is in dry state . The weight ration of water/calcium sulphate is preferably between 0.27 and 0.70, and more preferred between 0.35 and 0.55 such as between 0.35 and 0.45.

According to a second aspect of the present invention, a floor screed composition according to the first aspect of the invention is used for the manufacture of a floor screed.

According to some embodiments, the floor screed being provided may have a thermal conductivity measured according to NF EN 993-15 of at least 1,8 W/mK.

According to some embodiments, the floor screed composition may further comprise aggregates.

According to a third aspect of the invention, a method to provide a floor screed composition is provided, the method being set out in claim 6.

According to some embodiments, the addition of hydraulic binder and the expanded graphite may be performed in the presence of water.

According to some embodiments, at least part of the expanded graphite may be added to the hydraulic binder packed in a water soluble container.

This container can e.g. be a water soluble bag, e.g. a polyvinyl alcohol based bag.

According to some embodiments, at least part of the expanded graphite may be provided together with the water.

According to some embodiments, at least part of the expanded graphite may be provided together with the hydraulic binder.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, which illustrate, by way of example, the principles of the invention. This description is given for the sake of example only, without limiting the scope of the invention.

### Description of illustrative embodiments

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

### EXAMPLES

The following products were used for the preparation of the compositions in the examples :
- Calcium sulphate (CaSO₄) being binder named CAp and obtainable from La Chape liquide;
- Sand being 0/4 Perrin (Dmax 4mm)
- Expanded graphite (Exp. C): Timrex^{®} C-Therm^{™} 012 commercialised by Timcal;
- Natural graphite (Nat. C) : Timrex^{®} 50×100 commercialized by Timcal;
- Silicon carbide(SiC) as commercialized under the name F600 by LAMPLAN;
- Boron carbide (B₄C) as commercialized under the name F120 by LAMPLAN
- Aluminum oxide (Al₂O₃) : as commercialized under the name F1200 by LAMPLAN

Table 1 summarizes the compositions of the mortars which have been prepared and tested as follows:
1 : mortar preparation
   The binder (CaSO4) and the additive are weighted and mixed for 5min with a turbula mixer. The sand is weighted, and the volume of water is defined and weighted as well.
   First, the water is introduced in the mixer. The binder premixed with the additive is added and mixed for 30s at 140rpm, alter which the sand is added.
   The mixing procedure is continued according to the norm EN 196-1.
2: test specimen

Alter mixing the mortar is poured into two 14x16x4cm moulds
Let it dry for 28 days (at 20°C /65%HR) before testing
The test results are also added in the table 1. The amount of the additives which have been tested as thermal conductivity enhancers (i.e. expanded graphite, natural unexpanded graphite, silicon carbide, boron carbide and aluminum oxide) are expressed in weight % with respect to the weight of the calcium sulphate. The thermal conductivity (λ) has been measured on test specimens of 14x16x4 cm according to standard NF EN 993-15.

The results in table 1 show that compositions comprising the expanded graphite at the same dosage level expressed in weight % with respect to the binder, give higher thermal conductivities.

Compositions 2, 3a, 3b, 3c, 4a, 4b, 4c, 5a, 5b, 5c, 6a, 6b and 6c are comparative compositions.

**Table 1**

| | CaSO₄ | Sand | Water | Exp. C | Nat. C | SiC | B₄C | Al₂O₃ | λ |
|---|---|---|---|---|---|---|---|---|---|
| unit | kg/m³ | kg/m³ | l/m³ | wt% | wt% | wt% | wt% | wt% | W/mK |
| 1a | 650 | 1240 | 300 | 3 | | | | | 2.7 |
| 1b | 650 | 1240 | 300 | 6 | | | | | 3.3 |
| 2 | 650 | 1240 | 300 | | | | | | 1.9 |
| 3a | 650 | 1240 | 300 | | 3 | | | | 2.1 |
| 3b | 650 | 1240 | 300 | | 6 | | | | 2.5 |
| 3c | 650 | 1240 | 300 | | 11.5 | | | | 2.6 |
| 4a | 650 | 1240 | 300 | | | 3 | | | 2.1 |
| 4b | 650 | 1240 | 300 | | | 6 | | | 2.1 |
| 4c | 650 | 1240 | 300 | | | 11.5 | | | 2.2 |
| 5a | 650 | 1240 | 300 | | | | 3 | | 2.0 |
| 5b | 650 | 1240 | 300 | | | | 6 | | 2.1 |
| 5c | 650 | 1240 | 300 | | | | 11.5 | | 2.2 |
| 6a | 650 | 1240 | 300 | | | | | 3 | 2.1 |
| 6b | 650 | 1240 | 300 | | | | | 6 | 2.2 |
| 6c | 650 | 1240 | 300 | | | | | 11.5 | 2.1 |

| | | | | | | | | | |
|---|---|---|---|---|---|---|---|---|---|
| w% are based upon weight of CaSO₄ | | | | | | | | | |

It is to be understood that although preferred embodiments and/or materials have been discussed for providing embodiments according to the present invention, various modifications or changes may be made without departing from the scope of this invention.

## Claims

1. Floor screed composition, said composition comprising a hydraulic binder which is calcium sulphate and expanded graphite, **characterized in that** the amount of expanded graphite is of at least 0.01%w and less than 12 %w, the %w being based upon the weight of said hydraulic binder, the expanded graphite having a mean particle size D50, as measured by laser diffraction, ranging from 1 to 100µm, wherein the expanded graphite is present in an amount less than 2.5 %w, the %w being based upon the weight of said floor screed composition.

2. Floor screed composition according to claim 1 comprising expanded graphite in an amount of at least 0.4%w, the %w being based upon the weight of said hydraulic binder.

3. Floor screed composition according to any one of the preceding claims, wherein the floor screed composition further comprises an anti foaming agent.

4. Floor screed composition according to any one of the preceding claims, wherein the floor screed composition further comprises fluidizing agents and/or dispersants and/or plasticizers and/ or superplasticizers.

5. The use of a floor screed composition according to any of the claims 1 to 4 for the manufacture of a floor screed.

6. A method to provide a floor screed composition, said method comprises
- providing a hydraulic binder which is calcium sulphate
- providing expanded graphite such that the amount of expanded graphite is of at least 0.01%w and and less than 12 %w, the %w being based upon the weight of said hydraulic binder and the expanded graphite having a mean particle size D50, as measured by laser diffraction, ranging from 1 to 100µm
- adding said expanded graphite to said hydraulic binder to provide a floor screed composition,
wherein the expanded graphite is present in an amount less than 2.5 %w, the %w being based upon the weight of said floor screed composition.

7. A method according to claim 6 wherein the floor screed composition further comprises aggregates.

8. A method according to claim 6 or 7, wherein the addition of hydraulic binder and the expanded graphite being performed in the presence of water.

9. A method according to claim 8, wherein at least part of the expanded graphite is added to the hydraulic binder packed in a water soluble container.

10. A method according to claim 6 to 9, wherein at least part of the expanded graphite is provided together with the water.

11. A method according to claim 6 to 10, wherein at least part of the expanded graphite is provided together with the hydraulic binder.

## Patentansprüche

1. Estrichzusammensetzung, die Zusammensetzung umfassend ein hydraulisches Bindemittel, das Calciumsulfat und expandierter Graphit ist, **dadurch gekennzeichnet, dass** die Menge an expandiertem Graphit mindestens 0,01 Gewichts-% und weniger als 12 Gewichts-% ist, wobei die Gewichts-% auf das Gewicht des hydraulischen Bindemittels bezogen sind, wobei der expandierte Graphit eine mittlere Teilchengröße D50, gemessen durch Laserbeugung, in einem Bereich von 1 bis 100 µm aufweist, wobei der expandierte Graphit in einer Menge von weniger als 2,5 Gewichts-% vorhanden ist, wobei die Gewichts-% auf das Gewicht der Estrichzusammensetzung bezogen sind.

2. Estrichzusammensetzung nach Anspruch 1, umfassend expandierten Graphit in einer Menge von mindestens 0,4 Gewichts-%, wobei die Gewichts-% auf das Gewicht des hydraulischen Bindemittels bezogen sind.

3. Estrichzusammensetzung nach einem der vorherigen Ansprüche, wobei die Estrichzusammensetzung ferner ein Antischaummittel umfasst.

4. Estrichzusammensetzung nach einem der vorherigen Ansprüche, wobei die Estrichzusammensetzung ferner Fließmittel und/oder Dispergiermittel und/oder Weichmacher und/oder Superplastifizierer umfasst.

5. Verwendung einer Estrichzusammensetzung nach einem der Ansprüche 1 bis 4 zur Herstellung eines Estrichs.

6. Verfahren zum Bereitstellen einer Estrichzusammensetzung, wobei das Verfahren Folgendes umfasst
- Bereitstellen eines hydraulischen Bindemittels, das Calciumsulfat ist
- Bereitstellen von expandiertem Graphit, sodass die Menge an expandiertem Graphits mindestens 0,01 Gewichts-% und weniger als 12 Gewichts-% ist, wobei die Gewichts-% auf das Gewicht des hydraulischen Bindemittels bezogen sind, und wobei der expandierte Graphit eine mittlere Teilchengröße D50, gemessen durch Laserbeugung, in einem Bereich von 1 bis 100 µm aufweist,
- Hinzufügen des expandierten Graphits zu dem hydraulischen Bindemittel, um eine Estrichzusammensetzung bereitzustellen,
wobei der expandierte Graphit in einer Menge von weniger als 2,5 Gewichts-% vorhanden ist, wobei die Gewichts-% auf das Gewicht der Estrichzusammensetzung bezogen sind.

7. Verfahren nach Anspruch 6, wobei die Estrichzusammensetzung ferner Zuschlagstoffe umfasst.

8. Verfahren nach Anspruch 6 oder 7, wobei das Hinzufügen des hydraulischen Bindemittels und des expandierten Graphits in Anwesenheit von Wasser durchgeführt wird.

9. Verfahren nach Anspruch 8, wobei mindestens ein Teil des expandierten Graphits zu dem hydraulischen Bindemittel hinzugefügt wird, das in einem wasserlöslichen Behälter verpackt ist.

10. Verfahren nach einem der Ansprüche 6 bis 9, wobei zumindest ein Teil des expandierten Graphits zusammen mit dem Wasser bereitgestellt wird.

11. Verfahren nach einem der Ansprüche 6 bis 10, wobei zumindest ein Teil des expandierten Graphits zusammen mit dem hydraulischen Bindemittel bereitgestellt wird.

## Revendications

1. Composition de chape de plancher, ladite composition comprenant un liant hydraulique qui est du sulfate de calcium et du graphite expansé, **caractérisée en ce que** la quantité de graphite expansé est d'au moins 0,01 % en poids et inférieure à 12 % en poids, les pourcentages en poids étant basés sur le poids dudit liant hydraulique, le graphite expansé ayant une granulométrie moyenne D50, telle que mesurée par diffraction de laser, située dans la plage allant de 1 à 100 µm, dans laquelle le graphite expansé est présent en une quantité inférieure à 2,5 % en poids, le pourcentage en poids étant basé sur le poids de ladite composition de chape de plancher.

2. Composition de chape de plancher selon la revendication 1, comprenant du graphite expansé en une quantité d'au moins 0,4 % en poids, le pourcentage en poids étant basé sur le poids dudit liant hydraulique.

3. Composition de chape de plancher selon l'une quelconque des revendications précédentes, laquelle composition de chape de plancher comprend en outre un agent antimoussant.

4. Composition de chape de plancher selon l'une quelconque des revendications précédentes, laquelle composition de chape de plancher comprend en outre des agents fluidifiants et/ou des dispersants et/ou des plastifiants et/ou des superplastifiants.

5. Utilisation d'une composition de chape de plancher de l'une quelconque des revendications 1 à 4 pour la fabrication d'une chape de plancher.

6. Procédé pour former une composition de chape de plancher, ledit procédé comprenant
- la fourniture d'un liant hydraulique qui est du sulfate de calcium
- la fourniture de graphite expansé de façon que la quantité de graphite expansé soit d'au moins 0,01 % en poids et inférieure à 12 % en poids, les pourcentages en poids étant basés sur le poids dudit liant hydraulique, et le graphite expansé ayant une granulométrie moyenne D50, telle que mesurée par diffraction de laser, située dans la plage allant de 1 à 100 µm
- l'addition dudit graphite expansé audit liant hydraulique pour former une composition de chape de plancher,
dans lequel le graphite expansé est présent en une quantité inférieure à 2,5 % en poids, le pourcentage en poids étant basé sur le poids de ladite composition de chape de plancher.

7. Procédé selon la revendication 6, dans lequel la composition de chape de plancher comprend en outre des agrégats.

8. Procédé selon la revendication 6 ou 7, dans lequel l'addition de liant hydraulique et du graphite expansé est effectuée en présence d'eau.

9. Procédé selon la revendication 8, dans lequel au moins une partie du graphite expansé est ajoutée au liant hydraulique conditionné dans un récipient soluble dans l'eau.

10. Procédé selon les revendications 6 à 9, dans lequel au moins une partie du graphite expansé est fournie conjointement avec l'eau.

11. Procédé selon les revendications 6 à 10, dans lequel au moins une partie du graphite expansé est fournie conjointement avec le liant hydraulique.
